# EUROPÄISCHE PATENTANMELDUNG

(11) **EP 4 592 551 A1**
(43) Veröffentlichungstag der Anmeldung: **30.07.2025**
(21) Anmeldenummer: 25150867.7
(22) Anmeldetag: 09.01.2025
(51) Int. Cl.: F16G 5/06

(54) **RIEMEN MIT EINGEBETTETEM SENSOR ZUR VERBESSERTEN MESSUNG VON RIEMENBETRIEBSPARAMETERN, INSBESONDERE DER TEMPERATUR IN RIEMEN**

(30) Priorität: 24.01.2024 DE 102024200617
(71) Anmelder: ContiTech Deutschland GmbH, 30175 Hannover (DE)
(72) Erfinder: Lorenz, Eduard, 30175 Hannover (DE); Rosen, Simon, 30175 Hannover (DE); Dr. Sattler, Heiko, 30175 Hannover (DE); Masri, Samer, 30175 Hannover (DE)
(74) Vertreter: Preusser, Andrea

(57) **Zusammenfassung**

Riemen aus einem flexiblen Material mit einer darin angeordneten Elektronik, wobei mittels der Elektronik wenigstens eine Zustandsgröße des Riemens messbar sowie drahtlos an eine entfernt angeordnete Empfangseinheit weiterleitbar ist, und wobei die Elektronik mit einem wärmeleitfähigen elastischen Material ummantelt ist, das zur Vermittlung von Wärmeleifähigkeit partikel- und faserförmige Additive mit einem Anteil von maximal 15 Gew.-% enthält und die partikel- und faserförmigen Additive in einem Verhältnis von 4:1 bis 15:1 in das Ummantelungsmaterial einbezogen sind. Durch den Einbezug von partikel- und faserförmigen Additiven werden der Ummantelung nicht nur verbesserte thermische Leitfähigkeit, sondern auch verbesserte Signalübertragungseigenschaften vermittelt. Die vorliegende Erfindung betrifft weiterhin Anordnungen mit einem solchen Riemen, Riementransportrollen, und einer Antenne, die in räumlicher Nähe zur Elektronik angeordnet ist, so dass bei Betrieb des Riemens Informationen von der Elektronik auf die Antenne übertragen werden können, sowie die Verwendung eines mit Funktechnologie ausgestatteten Sensors in einem Riemen zur Bestimmung von Zustandsgrößen des Riemens wie insbesondere der Riementemperatur.

## Beschreibung

Die vorliegende Erfindung betrifft einen Riemen aus einem flexiblen Material mit einer darin angeordneten Elektronik, wobei mittels der Elektronik wenigstens eine Zustandsgröße des Riemens messbar sowie drahtlos an eine entfernt angeordnete Empfangseinheit weiterleitbar ist, wobei die Elektronik mit einem wärmeleitfähigen elastischen Material ummantelt ist, das zur Vermittlung von Wärmeleifähigkeit partikel- und faserförmige Additive mit einem Anteil von maximal 15 Gew.-% enthält und die partikel- und faserförmigen Additive in einem Verhältnis von 4:1 bis 15:1 in das Ummantelungsmaterial einbezogen sind. Die vorliegende Erfindung betrifft weiterhin Anordnungen mit einem solchen Riemen, Riementransportrollen, und einer Antenne, die in räumlicher Nähe zur Elektronik angeordnet ist, so dass bei Betrieb des Riemens Informationen von der Elektronik auf die Antenne übertragen werden können, sowie die Verwendung eines mit RFID-Technologie ausgestatteten Sensors in einem Riemen zur Bestimmung von Zustandsgrößen des Riemens wie insbesondere der Riementemperatur.

### Stand der Technik

Die Erfindung betrifft einen Riemen aus einem flexiblen Material, in dem eine Elektronik angeordnet ist, mittels welcher wenigstens einer Zustandsgröße des Riemens messbar sowie drahtlos an eine entfernt angeordnete Empfangseinheit weiterleitbar ist.

Kapitalintensive Agrarmaschinen und stationäre Industrieanlagen erfordern eine sorgfältige und Schäden vorbeugende Instandhaltung derselben. Daher werden die dort genutzten Antriebsriemen derzeit nach vergleichsweise kurzer Nutzungsdauer ausgewechselt, um die Gefahr von Schäden an den Maschinen oder Anlagen und somit kostspielige Stillstandzeiten zu verringern. Es wurde bereits mehrfach vorgeschlagen, derartige Antriebsriemen mit einer Elektronik auszustatten, welche mit einem entfernt angeordneten Überwachungssystem drahtlos in Verbindung steht. Die von dieser Elektronik sensorisch erfassten Zustandsdaten des Antriebsriemens werden dazu genutzt, eine riemenzustandsabhängige Wartung der Maschinen oder Anlagen vorzusehen, wodurch im Ergebnis die Anzahl derer Stillstandzeiten aus Wartungsgründen reduziert wird.

So ist aus der DE 10 2009 003 732 A1 ein flexibler Antriebsriemen bekannt, in dessen elastomerem Material eine Tasche ausgebildet ist, in der ein Sensor sowie ein damit elektrisch verbundenes flexibles Piezoelement angeordnet sind. Das flexible Piezoelement erzeugt aufgrund von Riemenbewegungen durch zeitliche Änderung seines Biegeradius elektrische Energieportionen, welche zur Energieversorgung des Sensors dienen. Gemäß einer dortigen ersten Ausführungsform ist das Piezoelement durch Einvulkanisieren fest und unlösbar mit dem Riemenmaterial verbunden. Gemäß einer zweiten Ausführungsform ist vorgesehen, dass der Antriebsriemen eine Tasche aufweist, in die das flexible Piezoelement nach der Vulkanisation des Riemens derart mit dem Sensor und elektrischen Verbindungselementen einsteckbar ist, dass das Piezoelement an die Bewegungen des Riemens im Betrieb angekoppelt ist. Durch die feste Verbindung des Piezoelements mit dem Riemenmaterial wird dieses bei einer betriebsbedingten Bewegung des Riemens zur Energieerzeugung angeregt. Die in dem Material des Riemens ausgebildete Tasche ist nach einem Einstecken des Sensors und des Piezoelements irreversibel verschließbar. Gemäß der DE 10 2009 003 732 A1 soll das Piezoelement in der neutralen Lage des Riemens angeordnet sein, d.h. an einer Position mit gleichem Abstand zur Ober und Unterseite des Riemens.

Als nachteilig wird beurteilt, dass das Einvulkanisieren der Elektronik wegen der bis zu 180°C betragenden Vulkanisationstemperatur und Drücke bis 1,5 MPa diese schädigen kann. Auch das Erzeugen einer Tasche im Material des Antriebsriemens ist unvorteilhaft, weil dadurch die Riemenstruktur geschädigt oder zumindest inhomogen wird. Die letztgenannten Nachteile weist nach diesseitiger Beurteilung auch der aus der DE 10 2010 002 551 A1 bekannte Antriebsriemen auf, bei dem eine Elektronik mit einem RFID-Transponder in das Material des Antriebsriemens einvulkanisiert ist. In der DE 10 2010 002 551 A1 ist die Elektronik auf der Unterseite des Riemens positioniert, d.h. unterhalb von den Riemen verstärkenden Korden.

Einen weiteren Nachteil birgt die übliche Herstellung von Riemenwickel auf einer Riemenaufbautrommel, bei der sich nach dem Vulkanisieren des Wickels bei der daran anschließenden Vereinzelung desselben in separate Antriebsriemen die dort eingebaute Elektronik nicht exakt lokalisieren lässt; durch die zur Vereinzelung notwendigen Schnitte kann die Elektronik dann zerstört werden. Dies kann insbesondere dann geschehen, wenn beispielsweise zur Ausbildung von Riemenzähnen Fließprozesse im Wickelmaterial stattgefunden haben und dadurch eine zuvor bekannte Position der Elektronik verändert ist. Zudem kann eine Schädigung der einvulkanisierten Elektronik bei einem Umkrempeln der aus dem Wickel vereinzelten Riemen erfolgen.

Außerdem sind in Antriebsriemen einvulkanisierte Elektroniken im Betrieb während des Umlaufs des Antriebsriemens an Riemenscheiben oder Variatorscheiben sehr häufigen Dehnungen und Stauchungen ausgesetzt. Dies kann zu einem nachteiligen Verlust des mechanischen Kontaktes zwischen dem Material des Antriebsreimens und dem Material der Elektronik führen, sofern die Elektronik wie üblich eine nur geringe Dehnfähigkeit aufweist.

Ein weiterer Ansatz zur Überwachung von Betriebsparametern von Riemen besteht darin, Sensoren separat von den Riemen unterzubringen. Beispielsweise ist in EP 3483472 A1 ein Riemen beschrieben, an dem eine Tasche befestigt ist, in der die Elektronik platziert werden kann. Auf diese Weise kann die Elektronik zu einem Zeitraum in die Riemenkonstruktion eingebracht werden, zu dem Vulkanisiationsprozesse abgeschlossen sind, so dass die Elektronik keinen hohen Temperaturen ausgesetzt werden muss. Ein Nachteil diese Ansatzes besteht allerdings darin, dass die Tasche über den Riemenkörper hinausragt, so dass der Riemen nicht in Applikationen verwendbar ist, bei denen der Riemen über dessen Oberseite umgelenkt wird.

Bei diesen vorbekannten Ansätzen stellt sich das Problem, dass die relevante Temperaturentwicklung an der Flankenseite des Riemens erfolgt (durch Reibung), aber an der Oberseite des Riemens gemessen wird. Da flexible Materialien wie Gummi in der Regel keine gute Wärmeleitfähigkeit aufweisen, kann die Temperatur an der Flankenseite bereits viel höher sein als auf der Oberseite des Riemens. Ein Einvulkanisieren der Elektronik an der Unterseite in den Riemenkörper scheitert aber daran, dass der Riemenkörper in der Regel bei hohen Drücken vulkanisiert wird, bei denen erhebliche Kräfte auf die Elektronik einwirken, die die Elektronik beschädigen. Eine Konstruktion wie in der EP 3483472 A1 lässt sich andererseits nur auf der Riemenoberseite realisieren, da hier die Tasche mit der Riemenoberseite verklebt wird und über den Riemen hinaussteht. Eine Lösung für diese Problem wurde kürzlich in der Weise vorgeschlagen, dass die Elektronik auf der Flankenseite im Riemenkörper angeordnet wird (nicht veröffentlicht).

Bei einer solchen Anordnung stellt sich aber das Problem, dass insbesondere, wenn ein Sensor zur Messung der Temperatur in ein elastisches Material eingebettet wird, um im Betrieb des Riemens eine Beschädigung des Sensors zu vermeiden, das die Temperaturweiterleitung durch das umgebende elastische Material abgeschwächt werden kann, und das darüber hinaus von einem Sensor ausgesendete Signale von dem elastischen Material abgeschirmt werden können.

Vor diesem Hintergrund lag der Erfindung die Aufgabe zugrunde, einen Riemen, vorzugsweise einen endlosen Antriebsriemen vorzustellen, der mit einer Elektronik zur Erfassung von Zustandsgrößen des Riemens ausgestattet ist, aber die angegebenen Nachteile nicht aufweist. Dabei soll insbesondere eine die Elektronik umgebende Umhüllung aus elastischem Material die Temperatur des Riemens ohne relevante Verzögerung aufgrund ungeeigneter Wärmeleitfähigkeitseigenschaften des Materials nicht stören oder verfälschen und es soll möglichst ebenfalls sichergestellt sein, dass von der Elektronik ausgesendete Signale nicht in relevantem Ausmaß gestört werden.

Die Lösung dieser Aufgabe wird mit einem Riemen erreicht, welcher die Merkmale des Anspruchs 1 aufweist. Vorteilhafte Weiterbildungen sind in den abhängigen Ansprüchen definiert. Insbesondere liegt der vorliegenden Erfindung die Erkenntnis zu Grunde, dass die Signalübertragungseigenschaften der elastischen Ummantelung der Elektronik durch eine bestimmte Zusammensetzung der zur Vermittlung von Wärmeleitfähigkeit zugesetzten Additive sogar verbessert werden können.

Demnach betrifft die Erfindung einen Riemen aus einem flexiblen Material, an dem eine Elektronik angeordnet ist, mittels welcher wenigstens einer Zustandsgröße des Riemens messbar sowie drahtlos an eine entfernt angeordnete Empfangseinheit weiterleitbar ist. Zur Lösung der gestellten Aufgabe ist bei diesem Riemen vorgesehen, dass die Elektronik mit einem wärmeleitfähigen elastischen Material ummantelt ist, das zur Vermittlung von Wärmeleifähigkeit partikel- und faserförmige Additive mit einem Anteil von maximal 15 Gew.-% enthält und die partikel- und faserförmigen Additive in einem Verhältnis von 4:1 bis 15:1 in das Ummantelungsmaterial einbezogen sind.

Die Riemen weisen eine Seite auf, die im Betriebszustand auf Antriebsrollen aufliegt ("Antriebsseite"), d.h. im Betriebszustand ist der Weg, den der Riemen auf dieser Seite zurücklegen muss, kürzer als auf der anderen Seite des Riemens. Diese Seite des Riemens kann daher ein Profil aufweisen, dass den Transport des Riemens über die Antriebscheibe erleichtert, beispielsweise ein Zahnprofil, V-Profil oder anderes Profil. Die "Oberseite" des Riemens bezeichnet in diesen Zusammenhang die dieser, ggf. profilierten, Riemenseite entgegengesetzte Seite. Die Flankenseite bezeichnet die Seiten, die die Ober- und Unterseite des Riemens miteinander verbindet.

Riemen enthalten zu Verstärkungszwecken Elemente, die sich in Zugrichtung des Riemens erstrecken. Diese Elemente liegen beispielsweise in Form von in den Riemen eingebetteten Korden vor.

Ummantelt bedeutet im Kontext der hier angegebenen Erfindung, dass die Elektronik vollständig oder im Wesentlichen vollständig (d.h. mindestens 90 % der gesamten Oberfläche, bevorzugt mindestens 95% und weiter bevorzugt mindestens 99 % der gesamten Oberfläche der Elektronik) von wärmeleitfähigem elastischem Material umgeben ist.

In einer bevorzugten Ausführungsform ist die Elektronik auf der Flankenseite im Riemenkörper angeordnet. Ein Riemen mit einer solchen Anordnung kann z.B. nach dem Vulkanisieren des Riemens durch Einbringen eines passenden Hohlraums in die Riemenflankenseite (oder durch Vorhalten einer entsprechenden Aussparung in einer Form, in der der Riemen hergestellt wird) und durch Einführen der ummantelten Elektronik in den Riemen hergestellt werden. Dadurch, dass Riemen und Ummantelung aus einem flexiblen/elastischen Material gebildet sind, ergibt sich eine ausreichende Haftung meist schon dadurch, dass Innendurchmesser der Aussparung und Außendurchmesser der Ummantelung gleich sind, so dass die Ummantelung fest in der Aussparung zu liegen kommt (kraftschlüssige Verbindung).

Bei der erfindungsgemäßen Ummantelung der Elektronik ist ein direkter Kontakt der Elektronik mit dem Riemenmaterial nicht erforderlich, weil der Zustandswert, der über die Elektronik zu bestimmende Zustandsgröße durch die wärmeleitenden Eigenschaften des elastischen Materials auf die Elektronik übertragen wird, und dort bestimmt werden kann. Auf der anderen Seite stellt die Ummantelung mit dem elastischen Material sicher, dass die Elektronik durch die Dehnungen und Stauchungen im Riemenbetrieb nicht beeinträchtigt wird, da diese durch das elastische Material abgefangen werden. Über die Möglichkeit, die Ummantelung unabhängig von der Vulkanisierung des Riemens durchzuführen (wobei die Ummantelung unter Standarddruckbedingungen vernetzt werden kann), kann sichergestellt werden, dass die Elektronik nicht beschädigt wird. Zudem kann die Ummantelung so ausgestaltet werden, dass sie nach dem Einfügen in die Riemenflanke kraft- oder formschlüssig mit dieser abbindet, so dass überstehende Kanten, die sich nachteilig auf das Laufverhalten des Riemens auswirken könnten, vermieden werden.

Die Besonderheit der Erfindung besteht darin, dass die Zusammensetzung der Ummantelung mit dem elastischen Material so abgestimmt ist, dass das Material nicht nur eine bessere Wärmeleitfähigkeit aufweist (im Vergleich zu einem ohne Additive formulierten elastischen Material), sondern auch bessere Signalübertragungseigenschaften, so das von der Elektronik gesendete Signale durch die Ummantelung nicht abgeschwächt, sondern verstärkt werden. Dazu enthält die Zusammensetzung neben dem elastischen Material zur Vermittlung von Wärmeleifähigkeit partikel- und faserförmige Additive mit einem Anteil von maximal 15 Gew.-%, wobei die partikel- und faserförmigen Additive in einem Verhältnis von 4:1 bis 15:1 in das Ummantelungsmaterial einbezogen sind.

Das elastische Material, aus dem die Ummantelung gebildet ist, ist vorzugsweise ein Elastomer, kann jedoch auch ein thermoplastisches Elastomer sein. Elastomere, die für die Ummantelung verwendet werden können, sind beispielsweise EPDM, Gemische von EPDM mit Polyolefinen, thermoplastische Polyurethanelastomere, Ethylen-Acrylat Elastomer, Ethylen-Propylen Mischpolymerisat (EPM), Chloropren (CR) oder Acylatelastomer. Zu Verstärkung und Verfestigung können diese Polymere, oder andere Materialen, die für die Herstellung der Ummantelung verwendet werden, können verstärkende Fasern enthalten. Beispielsweise kann in einer besonders günstigen Ausführungsform das flexible Material aus EPDM und insbesondere aus EPDM mit verstärkenden Fasern gebildet sein. Alternativ kann es sich bei dem elastischen Material auch um Nitrilkautschuk (NBR), Chloropren (CR), oder (teil)hydriertem Nitrilkautschuk (HNBR) handeln.

Die Ummantelung aus dem elastischen Material wird in der Regel vernetzt, wobei es, wie vorstehend schon angegeben, möglich ist, die Ummantelung unabhängig von dem Riemenmaterial zu vernetzen, wodurch die Bedingungen einer Vernetzung bei hohem Druck (die bei der Vulkanisierung von Riemen in der Regel angewendet werden) vermieden werden. Eine Vernetzung ist dabei z.B. thermisch (aber vorzugsweise drucklos) z.B. mit Peroxidvernetzern, aber auch durch nicht thermische Prozesse möglich (z.B. photochemisch oder mit Elektronenstrahlen), die für die Vulkanisierung von elastischen Riemenkörpern aus kostentechnischen Gründen nicht realisierbar sind, aber bei dem eine thermische Belastung der Elektronik vermieden wird. Es versteht sich, dass das Ausmaß der Vernetzung auf einem Niveau zu halten ist, das sicherstellt, dass die flexiblen/elastischen Eigenschaften des Ummantelungsmaterial durch das Vernetzen nicht in relevantem Umfang beeinträchtigt werden.

Zur Steigerung der wärmeleitenden Eigenschaften sind einerseits partikelförmige, und andererseits faserförmige wärmeleitende Additive und Füllstoffe (wobei diese Begriffe hier synonym verwendet werden) in das elastische Material der Ummantelung einbezogen. Hinsichtlich der Auswahl der partikelförmigen Füllstoffe unterliegt die vorliegende Erfindung keinen relevanten Beschränkungen, wobei solche Füllstoffe bevorzugt ausgewählt sind aus der Gruppe umfassend Metallpartikel, insbesondere in Form von Kupfer und/oder Aluminiumpartikeln, Metalloxide, bevorzugt ausgewählt aus der Gruppe umfassend Aluminiumoxid, Siliziumoxid, Magnesiumoxid, Titanoxid, und rotes Eisenoxid, Metallnitride, bevorzugt ausgewählt aus der Gruppe umfassend Aluminiumnitrid, Siliziumnitrid, und Bornitrid, Graphit, elektrisch leitfähiger Ruß, Graphen, oder ein Gemisch davon. Als faserförmige Additive und Füllstoffe sind insbesondere Kohlenstoffnanoröhrchen und Kohlenstofffasern geeignet. Während sich bei Verwendung nur z.B. von partikelförmigen Additiven keine Verbesserung der Signalübertragungseigenschaften feststellen ließ, wurde eine solche für die Kombination partikelförmigen und faserförmigen wärmeleitenden Additive gemäß den Vorgaben im Anspruch 1 festgestellt.

Als besonders geeignete als wärmeleitende Additivmischung in der Ummantelung haben sich eine Kombination von elektrisch leitfähigem Ruß und Kohlenstoff-Nanoröhrchen herausgestellt, bei der eine günstige Verstärkung von der Elektronik ausgesendeten Signalen festgestellt wurde.

Für elektrisch leitfähigen Ruß hat sich dabei ein Anteil im Bereich von 3 bis 14 Gew.-% und insbesondere 5 bis 10 Gew.-% als besonders geeignet herausgestellt. Für Kohlenstoff-Nanoröhrchen ist ein geringerer Anteil meist ausreichend, wie beispielsweise ein Anteil im Bereich von 0,1 bis 5 Gew.-%, und bevorzugt 0,5 bis 3 Gew.-%, und weiter bevorzugt 0,7 bis 2 Gew.-%.

Ganz besonders geeignet sind Additivmischungen aus elektrisch leitfähigem Ruß und Kohlenstoffnanoröhrchen mit 5 bis 10 Gew.-%, und insbesondere 7 bis 9 Gew.-% Ruß, sowie und 0,2 bis 1,5 Gew.-% und insbesondere 0,5 bis 1,2 Gew.-% Kohlenstoffnanoröhrchen.

In einer bevorzugten Ausführungsform ist daher vorgesehen, dass die Ummantelung der Elektronik so auf einen Hohlraum im Riemen, in den die ummantelte Elektronik eingeführt wird, angepasst ist, dass sie form- und oder kraftschlüssig abbindend (d.h. auf im Wesentlichen demselben Höhenniveau, d.h. ± 1 mm, bevorzugt ± 0,5 mm und noch weiter bevorzugt ± 0,2 mm), vorzugsweise zur Riemenflankenfläche, angeordnet ist.

Die Ummantelung kann aus demselben Material gebildet sein, wie der Riemenkörper. Die Ummantelung kann zudem mit Hilfe eines Haftvermittlers am Riemenkörper befestigt werden, oder sie kann so ausgestaltet sein, dass sie stoffschlüssig bindend in einen dafür vorgesehenen Hohlraum im Riemen eingeführt werden kann (z.B. wie ein Korken in eine Flasche). Hierfür ist es weiterhin bevorzugt, wenn die Ummantelung an dem Teil, der am weitesten in den Riemen eingeführt wird, konisch ausgestaltet ist um einen stoffschlüssigen Kontakt mit dem Riemenmaterial zu erleichtern.

Um eine ausreichende Dämpfung von Dehnungs- und Stauchungsprozessen auf die Elektronik zu realisieren, ist es weiterhin bevorzugt, wenn die Ummantelung der Elektronik eine Dicke im Bereich von 0,1 bis 5 mm, bevorzugt 0,2 bis 4 mm und weiter bevorzugt 1 bis 3 mm aufweist.

Die Elektronik ist vorzugweise so in den Riemen einzubeziehen, dass sie bei Betrieb des Riemens möglichst schon durch die Positionierung nur geringen Dehnungs- und Stauchungsbelastungen ausgesetzt wird. Dies lässt sich z.B. realisieren, indem eine Elektronik mit einer längeren und einer kürzeren Kante (z.B. mit rechteckiger oder länglicher Grundform) so in den Riemen eingebracht wird, dass kürzere Ausdehnung der Elektronik in Betriebsrichtung des Riemens und die längere Ausdehnung in Richtung orthogonal zur Betriebsrichtung orientiert ist. Wenn der Riemen dann über eine Rolle läuft, findet Dehnung und Stauchung nur über eine kurze Ausdehnung der Elektronik satt, was das Risiko einer Beschädigung minimiert.

Die Elektronik ist zweckmäßig auf einem Elektronikträger, wie beispielsweise einer Platine oder einer flexiblen Folie, befestigt. Die Elektronik umfasst bevorzugt weiterhin wenigstens einen Sensor.

Der wenigstens ein Sensor ist beispielsweise ein Temperatursensor, mit dessen Hilfe der Wärmeeintrag in den Riemen beziehungsweise dessen aktuelle Temperatur, während dessen Betrieb ermittelbar ist. Es ist bekannt, dass gerade die Betriebstemperatur eines Riemens eine entscheidende Größe für die Beurteilung der schadlosen Gebrauchsdauer eines Tragriemens, Förderriemens oder Antriebsriemens ist. Besondres bevorzugt handelt es sich bei dem Sensor um einen Tag, wie z.B. einen SAW-Sensor (Surface-Acoustic-Wave Sensor), bei dem Temperaturmessungen in Anwendungen durchgeführt werden, in denen sich die Empfangseinheit und die Elektronikeinheit relativ zueinander bewegen.

Der die elektronischen Bauelemente und den Sensor tragende oder mit diesem verbundene Elektronikträger kann aus einer sehr dünnen und in Umfangsrichtung des Riemens gesehen sehr kurzen Platine oder aus einer flexiblen Folie bestehen, wobei letztere Ausführungsform auch als sogenannte Folienelektronik bekannt ist.

Weiter kann vorgesehen sein, dass an dem Elektronikträger wenigstens ein digitaler Schaltkreis, ein analoger Schaltkreis, ein Sensor, ein Empfänger zum Empfangen von elektromagnetischen Wellen und ein Sender zum Beeinflussen oder Senden von elektromagnetischen Wellen angeordnet ist, die signaltechnisch miteinander verbunden sind.

Für derartige Elektronikträger ist es darüber hinaus bevorzugt, wenn der Empfänger und/oder der Sender in dem Riemen zur Flankenseite und der Sensor zur Innenseite des Riemens ausgerichtet ist. Auf diese Weise wird sichergestellt, dass Signale, die von außen an den Sensor übertragen werden sollen, oder Informationen, die vom Sensor an einen Empfänger abgegeben werden sollen, weitgehend störungsfrei übermittelt werden können.

Da Sender und/oder Empfänger in der Regel eine längliche Ausdehnung haben, kann es zweckmäßig sein, diese in der Ummantelung nicht linear, sondern abgewinkelt zu orientieren. Beispielsweise kann der Sender und/oder Empfänger in einer Hakenform angeordnet sein, so dass ein Teil des Senders und/oder Empfängers in Richtung des Inneren des Riemens und ein Teil parallel zur Riemenflanke ausgerichtet ist. In diesem Fall ist die Ummantelung bevorzugt so ausgebildet, dass sie im Bereich mit Kontakt zur Riemenflanke einen größeren Umfang und zur Riemenmitte hin einen geringeren Umfang aufweist. Zwischen diesen Teilen kann der Umfang zur Riemenmitte hin kontinuierlich oder stufenweise vermindert werden, wobei auch eine Kombination dieser Varianten möglich ist.

In einer bevorzugten Ausführungsform ist die Elektronik mit einer Vorrichtung zur drahtlosen Übertragung, beispielsweise in Form eines RFID-Systems ausgestaltet (HF- oder LF-RFID), wobei es vorgesehen sein kann, dass der Elektronikträger einen RFID-Transponder trägt oder als ein solcher ausgebildet ist, welcher mit einem Temperatursensor signaltechnisch in Kontakt ist, mittels dem sich die Temperatur des Ummantelungsmaterials und daraus die Temperatur des Riemenmaterials am gewählten Messort bestimmen lässt.

Der gemäß der Erfindung ausgebildete Riemen kann als ein ringförmiger oder spiralförmiger Endlosriemen, als ein Transportband, als ein Tragband oder als sogenannte Meterware ausgebildet sein. Riemen in Form von sogenannter Meterware sind in deren Längsrichtung vergleichsweise kurz und weisen jeweils zwei freie Enden auf.

Hinsichtlich der Riemenform unterliegt die vorliegende Erfindung keinen relevanten Beschränkungen, d.h. dass die Elektronik auf die durch diese Erfindung angegebene Weise im Prinzip in jede denkbare Riemenform integrierbar ist. Mögliche Riemenformen, sind hier beispielsweise Keilrippenriemen, Keilriemen, Zahn- bzw. Synchronriemen und Flachriemen.

Ein weiterer Aspekt der vorliegenden Erfindung betrifft eine Anordnung mit mindestens zwei Riementransportrollen, mindestens einem Riemen mit integrierter Elektronik, wie er vorstehend beschrieben wurde, und einer Antenne, die in einem Abstand in Bezug auf die in dem Riemen integrierte Elektronik angeordnet ist. Der Abstand sollte so angepasst sein, dass Signale, die von der Elektronik ausgesendet werden, von der Antenne mit einer annehmbaren Signalstärke detektiert werden können, so dass die Information von der Elektronik verlässlich übertragen werden kann. Der Fachmann ist in der Lage, einen geeigneten Abstand anhand einfacher Testmessungen einzustellen, wobei der Lage der Elektronik im Riemen und dem diese abdeckenden Material eine gewisse Bedeutung zukommt (im Sinne eines durch die Lage oder das Material besseren oder schlechteren Signals).

Bevorzugt ist der Abstand zwischen dem Riemen und der Antenne in dieser Anordnung im Bereich von 30 bis 80 mm, und weiter bevorzugt 40 bis 60 mm in Bezug auf die in dem Riemen integrierte Elektronik. Die Vorgabe des Abstands "in Bezug auf die in dem Riemen integrierte Elektronik" ist dabei so zu verstehen, dass der Abstand den minimalen Abstand der Elektronik zur Antenne bezeichnet, der dann auftritt, wenn die in den Riemen integrierte Elektronik während des Betriebs des Riemens der Antenne am nächsten kommt.

Ein noch weiterer Aspekt der vorliegenden Erfindung betrifft ein Verfahren zur Herstellung eines wie vorstehend beschriebenen Riemens, dass die folgenden Schritte umfasst:
i) Ummanteln einer Elektronik, die zur Bestimmung wenigstens einer Umgebungszustandsgröße ausgelegt ist, mit einem wärmeleitfähigen elastischen Material gemäß den Vorgaben wie oben angegeben und gegebenenfalls vernetzen oder vulkanisieren elastischen Materials;
ii) Bereitstellen eines Riemens mit einer Aussparung an der Riemenflankenseite;
iii) Einbringen der ummantelten Elektronik in die Aussparung.

Beim Einbringen der Elektronik ist es möglich, dass zur festen Verbindung ein Klebstoff zwischen das Riemenmaterial und die ummantelte Elektronik eingebacht wird, oder die Riemenoberfläche und/oder die Ummantelung mit einem haftvermittelnden Material (Primer) behandelt wird, und so eine günstige Haftung zwischen dem Riemen und der Elektronik zu erreichen. Dies ist aber nicht erforderlich.

In einem noch weiteren Aspekt betrifft die vorliegende Erfindung die Verwendung eines mit Funk-Technologie (z.B. mit RFID-Technologie) ausgestatteten Sensors in einem Riemen zur Bestimmung von Zustandsgrößen des Riemens, insbesondere der Riementemperatur, wobei der Sensor von einer wärmeleitfähigen Ummantelung aus einem elastischen Material eingeschlossen ist, wobei zur Vermittlung von Wärmeleifähigkeit partikel- und faserförmige Additive mit einem Anteil von maximal 15 Gew.-% in die Ummantelung einbezogen sind und die partikel- und faserförmigen Additive in einem Verhältnis von 4:1 bis 15:1 vorliegen.

Solange sich durch die Kombination nicht ein offensichtlicher Widerspruch ergibt, gilt für die vorstehenden Erläuterungen, dass Ausführungsformen und Ausgestaltungen, die für einen Aspekt als bevorzugt oder geeignet angegeben sind, ebenso für andere Aspekte als bevorzugt und geeignet gelten und beschrieben sind, selbst wenn diese Kombination aus Gründen der gebotenen Knappheit nicht explizit in der Beschreibung ausgeführt sind.

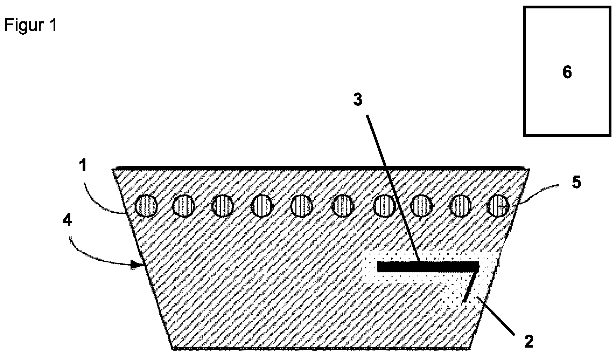

Im Folgenden wird die vorliegende Erfindung unter Bezugnahme auf die Figuren 1 bis 3 näher erläutert.
Figur 1 zeigt einen Riemen 1 gemäß einer Ausführungsform der Erfindung mit eingebetteter Elektronik 3, wobei die Elektronik eine Ummantelung 2 mit einem wärmeleitenden elastischen Material aufweist. In Figur 1 ist die Elektronik in die Flankenseite des Riemens eingeschoben und schließt formschlüssig mit der Riemenflankenseite ab. Von der Elektronik 3 können Informationen über Betriebsparameter des Riemens drahtlos an eine Empfangseinheit 6 weitergeleitet werden. Die Elektronik 3 ist im Riemen unterhalb von den Riemen verstärkenden Korden 5 angebracht.

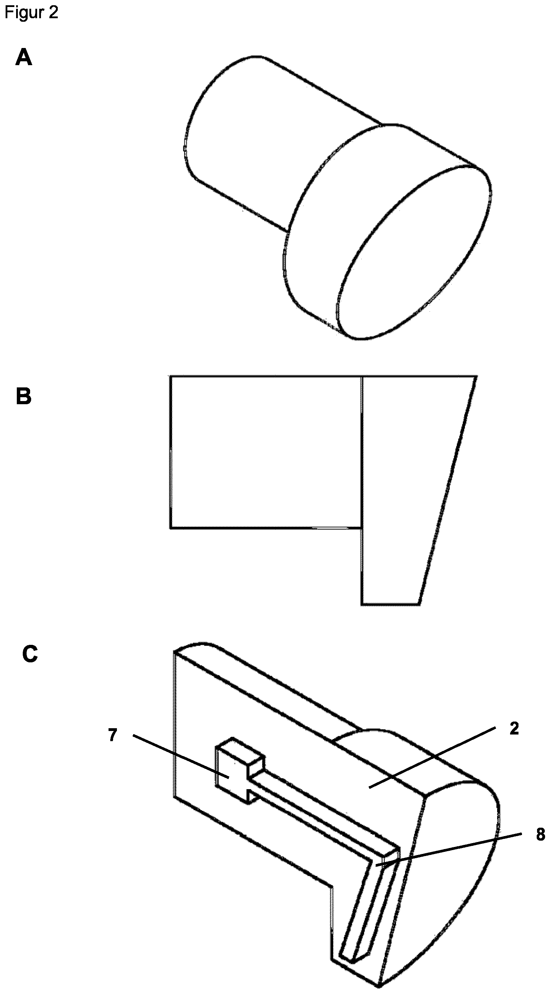

Figur 2 zeigt eine ummantelte Elektronik in verschiedenen Ansichten (2A und 2B) und im Querschnitt (2C). Die Ummantelung weist einen längeren zylindrisch ausgestalteten Teil mit kleinerem Durchmesser und einen kürzeren ebenfalls zylindrisch ausgestalteten Teil mit größerem Durchmesser auf, der an der Oberfläche abgekantet ist (abgestimmt auf eine abgekantete Riemenflankenseite). Im Aufschnitt 2C ist ersichtlich, dass der Sensor 7 der Elektronik in dem Teil der Ummantelung positioniert ist, der im Riemen weiter innen liegt, und der Empfänger/Sender 8 der Elektronik in Richtung zur Riemenoberfläche in der Ummantelung orientiert ist. Der Empfänger/Sender ist zudem in Hakenform ausgebildet, wobei ein Teil des Empfängers/Senders parallel zur Riemenoberfläche angeordnet ist.

In Folgenden wird die vorliegende Erfindung anhand von Beispielen noch näher illustriert, die jedoch nicht in irgendeiner Weise als beschränkend für den Schutzumfang dieser Anmeldung anzusehen ist.

### Beispiele:

### Beispiel 1

Ein Temperatursensor, der einen auf einer flexiblen Leiterfolie angebrachten Chip enthält, wurde mit einer fasergefüllten EPDM-Mischung ummantelt. Der ummantelte Temperatursensor wird anschließend in eine Aussparung auf der Flankenseite eines Breitkeilriemens eingeführt, so dass sich ein formschlüssiger Abschluss bildet. Der so hergestellte Riemen wurde in eine Testvorrichtung eingespannt und eine feststehende Antenne wurde im Abstand von 50 mm zum Riemen positioniert. Bei Betrieb des so hergestellten Riemens konnte die durch den Sensor detektierte Temperatur des Riemens über den Sensor ausgelesen werden.

### Beispiel 2: Optimierung der Ummantelungszusammensetzung

Im Laboraufbau wurde ein RFID-Tag und eine Antenne mit einem festen Abstand 50 mm voneinander positioniert. Anschließend wurde der RFID-Tag mit unterschiedlichen Materialien als 2 mm dicke Platte abgedeckt und dabei die Temperatur und die Signalstärke (SNR) "durch das Material" gemessen. Die Zusammensetzung der in faserverstärktem EPDM integrierten wärme- und elektrisch leitfähigen Additive in den zur Abdeckung verwendeten Platten und die ermittelten Signalstärken sind in der folgenden Tabelle 1 wiedergegeben (Ref. bezeichnet einen Test ohne Abdeckung des Sensors).

**Tabelle 1:**

| | Ref. | Probe 1¹ | Probe 2¹ | Probe 3¹ | Probe 4 |
|---|---|---|---|---|---|
| Anteil leitfähiger Ruß [%] | | - | 10 | - | 8 |
| Anteil C-Nanoröhrchen [%] | | - | - | 8 | 1 |
| Signalstärke* | 38 | 38 | 38 | 33 | 39 |

| | | | | | |
|---|---|---|---|---|---|
| * die Signalstärke wurde als Anzahl der Messwerte, die pro Zeiteinheit übermittelt werden kann; 1 = nicht erfindungsgemäß. | | | | | |

Aus Tabelle 1 wird deutlich, dass das Signal durch die Abdeckung mit EPDM nicht beeinträchtigt wird, wobei sich hohe Gehalte der wärmeleitfähigen Additive in einer abgeschwächten Signalstärke auswirken können. Andererseits wurde für das Material der Probe 4 eine gegenüber den Probe 1 bis 3 (ohne Additivkombination) verbesserte Signalstärke beobachtet.

### Bezugszeichenliste

- 1: Riemen
- 2: Ummantelung
- 3: Elektronik
- 4: Riemenkörper
- 5: Riemenkord
- 6: Empfangseinheit
- 7: Sensor
- 8: Empfänger/Antenne

## Patentansprüche

1. Riemen (1) aus einem flexiblen Material, an dem eine Elektronik (3) angeordnet ist, mittels welcher wenigstens eine Zustandsgröße des Riemens (1) messbar sowie drahtlos an eine entfernt angeordnete Empfangseinheit (6) weiterleitbar ist, **dadurch gekennzeichnet, dass** die Elektronik mit einem wärmeleitfähigen elastischen Material ummantelt ist, das zur Vermittlung von Wärmeleifähigkeit partikel- und faserförmige Additive mit einem Anteil von maximal 15 Gew.-% enthält und die partikel- und faserförmigen Additive in einem Verhältnis von 4:1 bis 15:1 in das Ummantelungsmaterial einbezogen sind, so dass bei verbesserter Wärmeleitung die Signalübertragung der ummantelten Elektronik gleich bleibt oder verbessert wird.

2. Riemen (1) nach Anspruch 1, **dadurch gekennzeichnet, dass** die ummantelte Elektronik kraft-, stoff- oderformschlüssig abbindend zur Riemenflankenfläche angeordnet ist.

3. Riemen (1) nach einem der Ansprüche 1 oder 2, **dadurch gekennzeichnet, dass** die Ummantelung mit dem wärmeleitfähigen elastischen Material eine Dicke im Bereich von 0,1 bis 5 mm, bevorzugt 0,2 bis 4 mm und weiter bevorzugt 1 bis 3 mm aufweist.

4. Riemen (1) nach einem der Ansprüche 1 bis 3, **dadurch gekennzeichnet, dass** das elastische Material der der Ummantelung aus einem Elastomer ausgewählt aus der Gruppe umfassend EPDM, Gemische von EPDM mit Polyolefinen, Polyurethanelastomeren, Ethylen-Acrylat Elastomer, Chloropren (CR), Acylatelastomer, das bevorzugt zusätzliche verstärkende Fasern enthält, und wobei das flexible Material weiter bevorzugt aus EPDM und insbesondere aus EPDM mit verstärkenden Fasern gebildet ist.

5. Riemen (1) nach einem der Ansprüche 1 bis 4, **dadurch gekennzeichnet, dass** das elastische Material als partikelförmiges Additiv zur Vermittlung von Wärmeleitfähigkeit ein Material ausgewählt aus der Gruppe umfassend Metallpartikel, insbesondere in Form von Kupfer und/oder Aluminiumpartikeln, Metalloxide, bevorzugt ausgewählt aus der Gruppe umfassend Aluminiumoxid, Siliziumoxid, Magnesiumoxid, Titanoxid, und rotes Eisenoxid, Metallnitride, bevorzugt ausgewählt aus der Gruppe umfassend Aluminiumnitrid, Siliziumnitrid, und Bornitrid, Graphit, elektrisch leitfähigen Ruß, Graphen, oder ein Gemisch davon enthält.

6. Riemen (1) nach einem der Ansprüche 1 bis 5, **dadurch gekennzeichnet, dass** das elastische Material als faserförmiges Additiv zur Vermittlung von Wärmeleitfähigkeit Kohlenstoff-Nanoröhrchen oder Kohlenstofffasern enthält.

7. Riemen (1) nach Anspruch 6, **dadurch gekennzeichnet, dass** das elastische Material ein Gemisch von elektrisch leifähigem Ruß, bevorzugt mit einem Anteil von 3 bis 14 Gew.-%, und weiter bevorzugt 5 bis 10 Gew.-%, und Kohlenstoff-Nanoröhrchen, bevorzugt mit einem Anteil von 0,1 bis 5 Gew.-%, weiter bevorzugt 0,5 bis 3 Gew.-%, und noch weiter bevorzugt 0,7 bis 2 Gew.-%, als wärmeleitenden Füllstoff enthält.

8. Riemen (1) nach einem der vorangehenden Ansprüche, **dadurch gekennzeichnet, dass** die kürzere Ausdehnung der Elektronik in Betriebsrichtung des Riemens und die längere Ausdehnung in Richtung orthogonal zur Betriebsrichtung angeordnet ist.

9. Riemen (1) nach einem der Ansprüche 1 bis 8, **dadurch gekennzeichnet, dass** die Elektronik einen Elektronikträger (8) aufweist, der aus einer dünnen und in Umfangsrichtung des Riemens (1) kurzen Platine oder aus einer flexiblen Folie besteht.

10. Riemen (1) nach Anspruch 9, **dadurch gekennzeichnet, dass** an dem Elektronikträger wenigstens ein digitaler Schaltkreis, ein analoger Schaltkreis, ein Sensor, ein Empfänger zum Empfangen von elektromagnetischen Wellen und ein Sender zum Beeinflussen oder Senden von elektromagnetischen Wellen angeordnet ist, die signaltechnisch miteinander verbunden sind.

11. Riemen (1) nach Anspruch 10, **dadurch gekennzeichnet, dass** die Elektronik als Funksystem ausgestaltet ist.

12. Riemen (1) nach Anspruch 10 oder 11, **dadurch gekennzeichnet, dass** der Sensor (9a) für eine oder mehrere physikalische Größen, z.B. Temperatur ausgebildet ist.

13. Riemen (1) nach einem der Ansprüche 1 bis 12, **dadurch gekennzeichnet, dass** dieser als ringförmiger oder spiraliger Endlosriemen, als Transportband, als Tragband oder als Meterware ausgebildet ist.

14. Anordnung mit mindestens zwei Riementransportrollen, mindestens einem Riemen gemäß einem der Ansprüche 1 bis 13 und einer Antenne, die in einem Abstand zum Riemen angeordnet ist, bevorzugt in einem Abstand im Bereich von 30 bis 80 mm, und weiter bevorzugt 40 bis 60 mm in Bezug auf die in dem Riemen integrierte Elektronik.

15. Verwendung eines mit Funktechnologie ausgestatteten Sensors in einem Riemen zur Bestimmung der von Zustandsgrößen des Riemens, insbesondere der Riementemperatur, wobei der Sensor von einer wärmeleitfähigen Ummantelung aus einem elastischen Material eingeschlossen ist, wobei zur Vermittlung von Wärmeleifähigkeit partikel- und faserförmige Additive mit einem Anteil von maximal 15 Gew.-% in die Ummantelung einbezogen sind und die partikel- und faserförmigen Additive in einem Verhältnis von 4:1 bis 15:1 vorliegen.
